(19) Europäisches Patentamt
European Patent Office
Office européen des brevets

(11) **EP 2 030 095 B1**

(12) **EUROPÄISCHE PATENTSCHRIFT**

(45) Veröffentlichungstag und Bekanntmachung des Hinweises auf die Patenterteilung:
**01.06.2011 Patentblatt 2011/22**

(21) Anmeldenummer: **07703795.0**

(22) Anmeldetag: **11.01.2007**

(51) Int Cl.:
***G05D 16/20*** *(2006.01)*

(86) Internationale Anmeldenummer:
**PCT/EP2007/050251**

(87) Internationale Veröffentlichungsnummer:
**WO 2007/137877 (06.12.2007 Gazette 2007/49)**

(54) **KRAFTFAHRZEUG-STEUERGERÄT ZUR DRUCKREGELUNG DES VOLUMENSTROMS EINER KRAFTFAHRZEUG-HYDRAULIKVORRICHTUNG SOWIE ZUGEHÖRIGES VERFAHREN ZUR DRUCKREGELUNG**

MOTOR VEHICLE CONTROL DEVICE FOR REGULATING THE PRESSURE OF THE VOLUMETRIC FLOW OF A MOTOR VEHICLE HYDRAULIC APPARATUS, AND ASSOCIATED METHOD FOR REGULATING THE PRESSURE

MODULE DE COMMANDE D'UN VÉHICULE AUTOMOBILE POUR RÉGULER LA PRESSION DU DÉBIT VOLUMIQUE D'UN DISPOSITIF HYDRAULIQUE D'UN VÉHICULE AUTOMOBILE ET PROCÉDÉ DE RÉGULATION DE LA PRESSION CORRESPONDANT

(84) Benannte Vertragsstaaten:
**DE FR GB IT**

(30) Priorität: **26.05.2006 DE 102006024708**

(43) Veröffentlichungstag der Anmeldung:
**04.03.2009 Patentblatt 2009/10**

(73) Patentinhaber: **Continental Automotive GmbH 30165 Hannover (DE)**

(72) Erfinder: **LEHNER, Oliver 93176 Beratzhausen (DE)**

(56) Entgegenhaltungen:
**EP-A- 1 118 517     DE-A1- 19 624 794**

• **SCOTTEDWARD HODEL A ET AL: "Variable-Structure PID Control to PreventIntegrator Windup" IEEE TRANSACTIONS ON INDUSTRIAL ELECTRONICS, IEEE SERVICE CENTER, PISCATAWAY, NJ, USA, vol. 48, no. 2, 1 April 2001 (2001-04-01), XP011023799 ISSN: 0278-0046**

**Beschreibung**

Die Erfindung betrifft ein Kraftfahrzeug-Steuergerät mit einem digitalen Regelkreis zur Druckregelung des Volumenstroms einer Kraftfahrzeug-Hydraulikvorrichtung mittels eines Stellglieds einer elektrischen Aktuatoreinrichtung, wobei im Vorwärtszweig des digitalen Regelkreises zwischen dessen digitalem Regler und dem Stellglied dessen elektrischen Aktuatoreinrichtung eine Strombegrenzungseinheit vorgesehen ist, die zum Bauteileschutz der elektrischen Aktuatoreinrichtung das Stellgrößensignal des digitalen Regelkreises begrenzt, wenn ein vorgegebener, zulässiger Stromschwellwert in der elektrischen Aktuatoreinrichtung überschritten ist.

Z.B. bei Automatikgetrieben in Kraftfahrzeugen werden als Hydraulikvorrichtungen diverse Kupplungen und/oder Bremsen zur Gangauswahl sowie zur Realisierung von Schaltübergängen hydraulisch betätigt. Insbesondere kommen in Kraftfahrzeugen hydraulisch betätigte Kupplungen und/oder Bremsen zum Koppeln oder Festhalten von Wellen zum Einsatz. Die hydraulische Betätigung erfolgt dabei in der Weise, dass der Durchfluss und damit der Hydraulikdruck des Hydraulikmediums in der jeweiligen Kupplung und/oder Bremse durch ein sogenanntes Regelmagnetventil mit Hilfe eines zugeordneten digitalen Regelkreises eingestellt werden. Der Durchlass des jeweiligen Regelmagnetventils ist vom elektrischen Spulenstrom, der durch das Ventil fließt, abhängig und wird durch einen Stromregler eingeregelt. Der Druck des Hydraulikmediums in der jeweiligen Hydraulikvorrichtung wird dabei insbesondere durch einen sogenannten PID-Regler als Druckregler eingestellt, der direkt die Endstufen des jeweiligen Regelmagnetventils über ein sogenanntes PWM (pulsweitenmoduliertes)- Signal ansteuert und somit den durch das Regelmagnetventil fließenden elektrischen Strom regelt.

In der Praxis kann es zu Schädigungen der elektrischen Bauteile der elektrischen Aktuatoreinrichtung eines derartigen Regelkreises kommen, die als Stellglied ein Regelmagnetventil aufweist, wenn der elektrische Strom, der durch die elektrischen Bauteile dieser elektrischen Aktuatoreinrichtung fließt, zu groß wird. Zum Schutz der elektrischen Bauteile der elektrischen Aktuatoreinrichtung wurde bisher im Vorwärtszweig des Regelkreises zwischen dessen digitalem Regler und dem Stellglied der Aktuatoreinrichtung eine Strombegrenzungseinheit zwischengeschaltet, die das Stellgrößensignal des digitalen Regelkreises begrenzt, wenn ein vorgegebener, zulässiger Stromschwellwert überschritten wird. Es wird dabei bisher ein fester Stromschwellwert zur Strombegrenzung und ein fester Schwellwert des Integralanteils des digitalen Reglers zur Begrenzung dessen Integralanteils verwendet. Diese feste Begrenzung des Integralanteils ist in der Regel zu hoch. Dies führt zu einer Totzeit des digitalen Regelkreises, wenn der elektrische Strom für das Stellglied der elektrischen Aktuatoreinrichtung die feste Begrenzung wieder verlassen soll, d.h. unterhalb des Stromschwellwerts liegen soll. Denn dann baut der digitale Regler erst den Integralteil seines ausgegebenen Stellgrößensignals ab. Diese Totzeit ist unerwünscht und kann zu Problemen bei Schaltübergängen führen. Dies wird umso kritischer, je höher die Anforderungen an die Schnelligkeit der Schaltübergänge eines Getriebes und/oder Bremse werden.

Ein gattungsgemäßes Kraftfahrzeug-Steuergerät zur Steuerung einer Bremsanlage ist aus EP 1 118 517 A1 bekannt.

Der Erfindung liegt die Aufgabe zu Grunde, ein Kraftfahrzeug-Steuergerät bereitzustellen, das eine möglichst verzögerungsarme Druckregelung des Volumenstroms der Kraftfahrzeug-Hydraulikvorrichtung mittels eines Stellglieds einer elektrischen Aktuatoreinrichtung unter gleichzeitiger Einhaltung eines vorgegebenen, zulässigen Stromschwellwerts zum Bauteileschutz der elektrischen Aktuatoreinrichtung erlaubt. Gemäß der Erfindung wird diese Aufgabe bei einem Kraftfahrzeug-Steuergerät der eingangs genannten Art dadurch gelöst, dass der digitale Regler eine zusätzliche Begrenzungseinheit aufweist, die den I-Anteil seines Stellgrößensignals im Wesentlichen ab dem Zeitpunkt der Aktivierung der Strombegrenzungseinheit begrenzt, wobei die Strombegrenzungseinheit mit einer Strommesseinheit der elektrischen Aktuatoreinrichtung über einen Rückkoppelzweig gekoppelt ist, über den der gemessene elektrische Strom am Stellglied mittels eines Strommesssignals übermittelt wird.

Dadurch, dass der I-Anteil bzw. Integralanteil des Stellgrößensignals des digitalen Reglers begrenzt wird, sobald die Strombegrenzungseinheit aktiviert worden ist, kann der Integralanteil des Stellgrößensignals nicht über einen Maximalwert hinaus weiter anwachsen. Auf diese Weise wird eine unzulässige hohe Totzeit des digitalen Reglers nach Verlassen der Begrenzung des Stellgrößensignals der Strombegrenzungseinheit weitgehend vermieden. Somit ist eine reaktionsschnelle Druckregelung des Volumenstroms in der Kraftfahrzeug-Hydraulikvorrichtung möglich.

Die Erfindung betrifft auch ein Verfahren zur Druckregelung des Volumenstroms einer Kraftfahrzeug-Hydraulikvorrichtung mittels des Stellglieds einer elektrischen Aktuatoreinrichtung eines digitalen Regelkreises, wobei durch eine Strombegrenzungseinheit im Vorwärtszweig des digitalen Regelkreises zwischen dessen digitalem Regler und dem Stellglied dessen elektrischen Aktuatoreinrichtung das Stellgrößensignal des digitalen Regelkreises zum Bauteileschutz der elektrischen Aktuatoreinrichtung begrenzt wird, wenn ein vorgegebener, zulässiger Stromschwellwert in der elektrischen Aktuatoreinrichtung überschritten wird, welches dadurch gekennzeichnet ist, dass durch eine zusätzliche Begrenzungseinheit des digitalen Reglers der I-Anteil seines Stellgrößensignals im Wesentlichen ab dem Zeitpunkt der Aktivierung der Strombegrenzungseinheit begrenzt wird, wobei die Strombegrenzungseinheit (LI) mit einer Strommesseinheit (GM) der elektrischen Aktuatoreinrichtung (EP) über einen Rückkoppelzweig (RK2) gekoppelt ist, über den der gemessene elektrische Strom ($c_m$) am Stellglied (CV) mittels eines Strommesssignals ($Sc_m$) übermittelt wird.

Sonstige Weiterbildungen der Erfindung sind in den Unteransprüchen wiedergegeben.

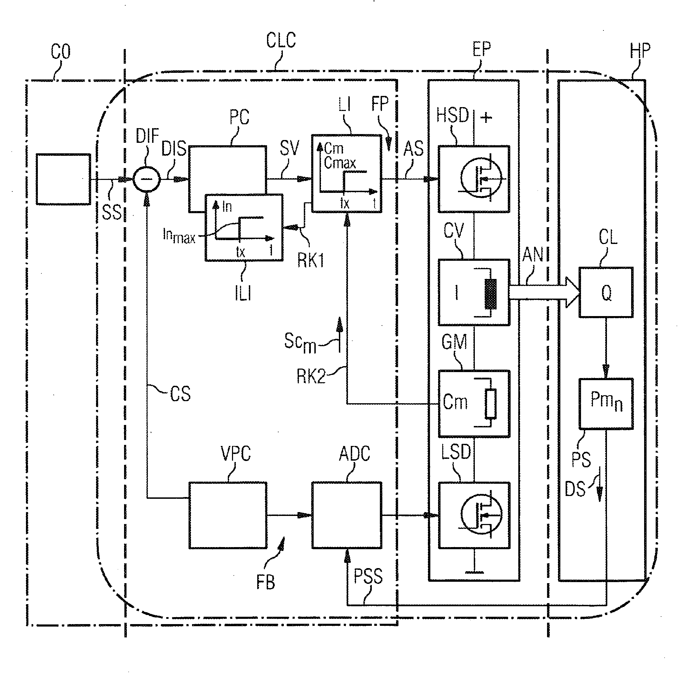

Die Erfindung und ihre Weiterbildungen werden nachfolgend anhand einer einzigen Figur näher erläutert.

Die Figur zeigt in schematischer Darstellung als Kraftfahrzeug-Steuergerät beispielhaft eine Getriebesteuerung CO. Deren Hauptkomponenten sind in der Figur durch einen strichpunktierten rechteckförmigen Rahmen gekennzeichnet. Sie dient der Einstellung des Volumenstroms Q eines Hydraulikmediums, insbesondere einer Hydraulikflüssigkeit wie zum Beispiel Hydrauliköl, in einer Kraftfahrzeug-Hydraulikvorrichtung HP mittels des elektrischen Stellglieds bzw. Aktuators CV einer elektrischen Aktuatoreinrichtung EP. Die Getriebesteuerung CO ist vorzugsweise als Automatikgetriebesteuergerät für ein Automatikgetriebe ausgebildet. Die elektrische Aktuatoreinrichtung EP weist als Stellglied ein Regelmagnetventil CV zwischen ihrer eingangsseitigen, hochpotentialigen Treiberstufe HSD und ihrer niederpotentialigen Treiberstufe LSD auf. Die beiden Treiberstufen können insbesondere Bestandteil der Getriebesteuerung CO sein. Durch Einstellung des Spulenstroms I des Regelmagnetventils CV taucht dessen Anker AN in einem Stellzylinder verschieden tief in den Volumenstrom Q der Hydraulikvorrichtung HP ein. Der zeichnerischen Einfachheit halber ist der Anker AN in der Figur lediglich durch einen Pfeil angedeutet. Die Hydraulikvorrichtung HP ist in der Praxis durch mindestens eine Kupplung und/oder durch mindestens eine Hydraulikbremse CL gebildet. Die Kupplung bzw. die Hydraulikbremse CL steht vorzugsweise mit einem Getriebe des Kraftfahrzeugs in Wirkverbindung. Dieses ist hier der zeichnerischen Einfachheit halber weggelassen worden. Dem Spulenstrom I des Regelmagnetsventils CV ist über dessen Kennlinienfeld ein bestimmter Hydraulikdruck des Volumenstroms Q in der Hydraulikvorrichtung HP zugeordnet. Um den Spulenstrom I des Regelmagnetventils CV auf einen bestimmten zeitlichen Sollstromverlauf möglichst präzise und schnell einzuregeln, das heißt äquivalent dazu ausgedrückt einen gewünschten zeitlichen Druckverlauf des Volumenstroms Q in der Hydraulikvorrichtung HP korrespondierend zum Spulenstrom I zu erzeugen, weist die Getriebesteuerung CO einen dynamischen, digitalen Regler PC im Vorwärtszweig FP ihres digitalen Regelkreises CLC auf. Der digitale Regler PC ist insbesondere als sogenannter PID-Regler ausgebildet. Er gibt ein Stellgrößensignal SV an eine nachgeordnete Strombegrenzungseinheit LI aus. Diese Strombegrenzungseinheit LI ist über einen Rückkoppelzweig RK2 mit einem Strommessglied GM verbunden, das dem Regelmagnetventil CV in der elektrischen Aktuatoreinrichtung EP zugeordnet ist. Dieses Strommessglied kann insbesondere integrale Komponente der Getriebesteuerung CO sein. Es übermittelt entsprechend der Taktung des digitalen Regelkreises CLC gemessene Stromwerte $c_m$ des elektrischen Spulenstroms des Regelmagnetventils CV mittels des Strommesssignals $Sc_m$ an die Strombegrenzungseinheit LI über den Rückkoppelpfad RK2. Der Strombegrenzungseinheit LI ist ein maximal zulässiger Stromwellwert $c_{max}$ vorgegeben, auf den der Spulenstrom I des Regelmagnetventils CV begrenzt wird, falls dieser diesen Schwellwert $c_{max}$ überschreitet. Dazu nimmt die Strombegrenzungseinheit LI eine entsprechende Kappung bzw. Begrenzung des Stellgrößensignals SV am Ausgang des digitalen Reglers PC vor. Hier im Ausführungsbeispiel wird durch den digitalen Stromregler PC vorzugsweise das Tastverhältnis eines PWM (pulsweitenmodulierten)- Signals als Stellgrößensignal verändert. Dieses taktet seinerseits über den Endstufentreiber HSD die Versorgungsspannung des Regelmagnetventils CV und regelt dadurch den Spulenstrom I des Regelmagnetventils CV. Der zulässige Stromschwellwert $c_{max}$ für den Ist-Strom des Regelmagnetventils CV wird vorzugsweise derart festgelegt, dass Schädigungen oder sonstige unzulässige Beanspruchungen der elektrischen Bauteile, insbesondere des Regelmagnetventils CV der elektrischen Aktuatoreinrichtung EP in der Praxis weitgehend vermieden sind. Die Strombegrenzungseinheit LI gibt an den hochohmigen Endstufentreiber HSD somit ein modifiziertes Stellgrößensignal AS aus, das dem eingangsseitigen Stellgrößensignal SV entspricht, wenn der gemessene Ist-Strom $c_m$ unterhalb des vorgegebenen, zulässigen Stromschwellwerts $c_{max}$ liegt. Es gibt ein modifiziertes Stellgrößensignal AS aus, das um einen bestimmten Faktor gegenüber dem eingangsseitigen Stellgrößensignal SV reduziert ist, wenn der gemessene Ist-Strom $c_m$ des Regelmagnetventils CV den vorgegebenen zulässigen Stromschwellwert $c_{max}$ überschreitet. Der Reduktionsfaktor für das Stellgrößensignal SV wird also in diesem Fall derart gewählt, dass eine Begrenzung des Ist-Stroms I im Regelmagnetventil auf den maximal zulässigen Stromschwellwert $c_{max}$ resultiert.

Der Kraftfahrzeug-Hydraulikvorrichtung HP ist im Rückkoppelzweig FB des digitalen Regelkreises CLC ein Drucksensor PS zugeordnet, der den Druck $Pm_n$ des Volumenstroms Q in der Kraftfahrzeug-Hydraulikvorrichtung HP misst und ein Drucksignal DS ausgibt. Das Drucksignal DS wird mit Hilfe eines nachfolgenden A/D-Wandlers ADC im Rückkoppelzweig FB digitalisiert. Mit Hilfe einer nachgeordneten Umrechnungseinheit VPC im Rückkoppelzweig FB werden die digitalisierten Spannungswerte des Drucksignals DS in korrespondierende Druckwerte umgerechnet und daraus ein korrespondierender Ist-Stromwert als gemessene Regelgröße CS anhand von abgespeicherten Kennlinienfeldern des Regelmagnetventils CV und der Hydraulikvorrichtung HP ermittelt. Diese Kennlinienfelder geben den funktionalen Zusammenhang zwischen dem jeweiligen Spulenstrom des Regelmagnetventils CV und dem bewirkten Druck des Volumenstroms Q wieder. Die ermittelte Regelgröße CS wird einem Differenzbildner bzw. Subtrahierglied DIF zugeführt. Dieses bildet die Differenz zwischen einem eingangsseitig zugeführten, vorgegebenen Solldrucksignal SS und dem gemessenen Drucksignal CS. Das Subtrahierglied DIF gibt diese Differenz als Regelabweichungssignal DIS an den Eingang des PID-Reglers PC aus. Das Solldrucksignal SS wird dabei durch ein Sollstromsignal repräsentiert. Entsprechendes gilt für die gemessene Regelabweichung CS.

Der PID-Regler PC weist nun eine zusätzliche Begrenzungseinheit ILI auf, die den I-Anteil In seines Stellgrößensignals SV im Wesentlichen ab dem Zeitpunkt tx der Aktivierung der Strombegrenzungseinheit LI ebenfalls begrenzt. Dazu steht die Strombegrenzungseinheit LI mit dem digitalen PID-Regler PC über einen Rückkoppelzweig RK1 in Verbindung. Als Stellgrößensignal SV wird hier im Ausführungsbeispiel das Taktverhältnis eines PWM (pulsweitenmodulierten)- Signals zum Einstellen des Spulenstroms I des Stellglieds CV verwendet. Dieses pulsweitenmodulierte Signal steuert die hochohmige Treiberstufe HSD derart an, dass ein gewünschter Spulenstromwert des Stellglieds CV durch die hochohmige Treiberstufe HSD eingestellt wird.

Zweckmäßigerweise erzeugt der PID-Regler PC das Stellgrößensignal SV zur Ansteuerung des Stellglieds CV der elektrischen Aktuatoreinrichtung EP nach folgender Beziehung:

$$\Theta = (P_n + I_n + D_n) \cdot s_\Theta$$

mit

$$P_n = p \cdot e_{c_n} \, ,$$

$$I_n = I_{n-1} + \left( i \cdot e_{c_n} \cdot \delta_n \right) ,$$

$$D_n = \frac{d \cdot (e_{c_n} - e_{c_{n-1}})}{\delta_n} \, ,$$

und

$$e_{c_n} = p_{t_n} - p_{m_n} \, ,$$

ausgibt, wobei

$e_{c_n}$ die Differenz (Regelabweichung) zwischen Solldruck und gemessenem Druck des Volumenstroms

Q der Hydraulikvorrichtung HP,

$p_{t_n}$ den Solldruck für den Volumenstrom Q der Hydraulikvorrichtung HP,

$p_{m_n}$ den gemessenen Druck des Volumenstroms Q der Hydraulikvorrichtung,

$p$ den P-Koeffizienten des resultierenden Proportionalanteils $P_n$ des Stellgrößensignals SV,

$i$ den I-Koeffizienten des resultierenden Integralanteils $I_n$ des Stellgrößensignals SV,

$d$ den D-Koeffizienten des resultierenden Differentialanteils des Stellgrößensignals SV,

$P_n$ den resultierenden Proportionalanteil des Stellgrößensignals SV,

$I_n$ den resultierenden Integralanteil des Stellgrößensignals SV,

$D_n$ den resultierenden D-Anteil des Stellgrößensignals SV,

$\delta_n$ die Zeit zwischen zwei Regleraufrufen (Reglerzykluszeit) des PID-Reglers PC,

$\Theta$ das resultierende Tastverhältnis des Stellgrößensignals SV zur Treiberansteuerung (Stellgröße) des Stellglieds CV der elektrischen Aktuatoreinrichtung EP,

$s_\Theta$ einen Skalierungsfaktor, und

n den Zeittakt des digitalen PID-Reglers PC

bezeichnet.

In vorteilhafter Weise wird das Stellgrößensignal SV des digitalen PID-Reglers PC mit Hilfe der Strombegrenzungseinheit LI nach folgendem Zusammenhang begrenzt:

$$\Theta_{n\,\max} = \Theta_{n-1} \cdot \frac{c_{\max}}{c_m} \cdot (1 + \gamma) \, ,$$

wobei

$\Theta_{n\,\max}$ das begrenzte Tastverhältnis des Stellgrößensignals SV ist,

$\Theta_{n-1}$ das (begrenzte) Tastverhältnis im vorausgegangenen Reglerzyklus des Stellgrößensignals ist,

$c_m$ der gemessene Strom des Stellglieds CV der elektrischen Aktuatoreinrichtung EP ist,

$c_{max}$ der maximal erlaubte Strom des Stellglieds CV der elektrischen Aktuatoreinrichtung EP ist,

$\gamma$ eine zusätzlich erlaubte Überschreitung des Stroms des Stellglieds CV ist, um Messfehler auszugleichen (optional), und

n der Zeittakt des digitalen PID-Reglers PC ist.

Sobald die Strombegrenzungseinheit LI zum Zeitpunkt tx bei Überschreiten des gemessenen Spulenstroms $c_m$ des vorgegebenen Stromschwellwerts $c_{max}$ anspricht, wird zusätzlich durch den digitalen PID-Regler PC der Integralanteil $I_n$ dessen Stellgrößensignals SV nach folgender Beziehung in vorteilhafter Weise begrenzt:

$$I_{n\,max} = \frac{\Theta_{n-1}}{s_\Theta} \cdot \frac{c_{max}}{c_m} \cdot (1 + \gamma) \cdot (1 + \theta),$$

wobei

$I_{n\,max}$ der maximal erlaubte I-Anteil des Stellgrößensignals SV ist,

$\Theta_{n-1}$ das begrenzte Tastverhältnis des Stellgrößensignals SV im vorausgegangenen Reglerzyklus ist,

$c_m$ der gemessene Strom des Stellglieds CV ist,

$c_{max}$ der maximal erlaubte elektrische Strom des Stellglieds CV ist,

$\gamma$ eine zusätzlich erlaubte Überschreitung des Stroms des Stellglieds CV ist, um Messfehler auszugleichen (optional),

$\theta$ eine erlaubte Überhöhung des I-Anteils ist, um Regeln im Grenzbereich zu ermöglichen,

$s_\Theta$ ein Skalierungsfaktor ist, und

n der Zeittakt des digitalen PID-Reglers PC ist.

Zusammenfassend betrachtet wird also der Spulenstrom durch das Regelmagnetventil gemessen und das Tastverhältnis des pulsweitenmodulierten Stellgrößensignals zur Ansteuerung der eingangsseitigen Treiberstufe so begrenzt, dass der erlaubte Ventilstrom $c_{max}$ nicht oder nur um einen definierten Faktor überschritten wird. Der Integralanteil des Stellgrößensignals SV wird zusätzlich zweckmäßigerweise derart begrenzt, dass der maximale Strom $c_{max}$ noch erreicht wird, der Integralanteil darüber hinaus aber nicht weiter anwächst. Um auch noch in diesem Bereich Regeln zu können, ist es vorteilhaft, die Begrenzung des Integralanteils etwas höher zu wählen wie z.B. 5% über die aus der Strombegrenzung errechneten Begrenzung des Drucks.

Auf diese Weise ist es möglich, den Ventilstrom des Regelmagnetventils im Rahmen der Messgenauigkeit präzise zu begrenzen. Da die Begrenzung, das heißt der Stromschwellwert $c_{max}$ in der Regel grob ausgelegt werden kann, kann die Strommessung ebenfalls entsprechend grob ausgelegt werden. Sie ist somit kostengünstig realisierbar. Der Integralanteil wird abhängig vom gemessenen Spulenstrom begrenzt, d.h. der Schwellwert für die Begrenzung des Integralanteils liegt so niedrig als möglich und so hoch wie nötig. Mit anderen Worten ausgedrückt wird die Begrenzung des I-Anteils des Stellgrößensignals des digitalen Reglers dynamisch durch die Rückkopplung mit der Strombegrenzungseinheit im Vorwärtszweig des digitalen Regelkreises zwischen dem digitalen Regler und dem Stellglied begrenzt. Es ist also eine adaptive Begrenzung des I-Anteils des Stellgrößensignals in Abhängigkeit von der nachgeordneten Strombegrenzung der Strombegrenzungseinheit bereitgestellt. Auf diese Weise sind unerwünschte Totzeiteffekte, die durch einen zu hohen Integralanteil herrühren könnten, weitgehend vermieden. Dadurch sind schnelle Zeitübergänge bei Getrieben, insbesondere bei Automatikgetrieben, weitgehend verzögerungsarm, d.h. reaktionsschnell ermöglicht. Insbesondere bleiben dadurch etwaig noch verbleibende Totzeiteffekte unterhalb von 10msec.

**Patentansprüche**

1. Kraftfahrzeug-Steuergerät (CO) mit einem digitalen Regelkreis (CLC) zur Druckregelung des Volumenstroms (Q) einer Kraftfahrzeug-Hydraulikvorrichtung (HP) mittels eines Stellglieds (CV) einer elektrischen Aktuatoreinrichtung (EP), wobei im Vorwärtszweig (FP) des digitalen Regelkreises (CLC) zwischen dessen digitalem Regler (PC) und dem Stellglied (CV) dessen elektrischen Aktuatoreinrichtung (EP) eine Strombegrenzungseinheit (LI) vorgesehen ist, die zum Bauteileschutz der elektrischen Aktuatoreinrichtung (EP) das Stellgrößensignal (SV) des digitalen Regelkreises (CLC) begrenzt, wenn ein vorgegebener, zulässiger Stromschwellwert ($c_{max}$) in der elektrischen Aktuatoreinrichtung (EP) überschritten ist,
**dadurch gekennzeichnet,**
**dass** der digitale Regler (PC) eine zusätzliche Begrenzungseinheit (ILI) aufweist, die den Integralanteil ($I_n$) seines Stellgrößensignals (SV) im Wesentlichen ab dem Zeitpunkt (tx) der Aktivierung der Strombegrenzungseinheit (I) begrenzt,
wobei die Strombegrenzungseinheit (LI) mit einer Strommesseinheit (GM) der elektrischen Aktuatoreinrichtung (EP) über einen Rückkoppelzweig (RK2) gekoppelt ist, über den der gemessene elektrische Strom ($c_m$) am Stellglied (CV) mittels eines Strommesssignals ($Sc_m$) übermittelt wird.

2. Kraftfahrzeug-Steuergerät nach Anspruch 1,
**dadurch gekennzeichnet,**
**dass** die Strombegrenzungseinheit (LI) mit dem digitalen Regler (PC) über einen Rückkoppelzweig (RK1) zur Begrenzung des Integralanteils ($I_n$) des Stellgrößensignals (SV) in Verbindung steht.

3. Kraftfahrzeug-Steuergerät nach einem der vorhergehenden Ansprüche,
**dadurch gekennzeichnet,**
**dass** der Kraftfahrzeug-Hydraulikvorrichtung (HP) im Rückkoppelzweig (FB) des digitalen Regelkreises (CLC) ein Drucksensor (PS) zugeordnet ist, der den Druck ($Pm_n$) des Volumenstroms (Q) in der Kraftfahrzeug-Hydraulikvorrichtung (HP) misst und ein den Druck repräsentierendes Regelgrößensignal (CS) ausgibt.

4. Kraftfahrzeug-Steuergerät nach Anspruch 3,
**dadurch gekennzeichnet,**
**dass** der Ausgang dieses Drucksensors (PS) mit einem Subtrahierglied (DIF) am Eingang des digitalen Regelkreises (CLC) in Verbindung steht, das für den digitalen Regler (PC) ein Regelabweichungssignal (DIS) zwischen einem eingangsseitig zugeführten, vorgegebenen Solldrucksignal (SS) und dem gemessenen Regelgrößensignal (CS) des Drucksensors (PS) erzeugt.

5. Kraftfahrzeug-Steuergerät nach einem der vorhergehenden Ansprüche,
**dadurch gekennzeichnet,**
**dass** das Stellglied (CV) der elektrischen Aktuatoreinrichtung (EP) als elektromagnetisches Regelmagnetventil ausgebildet ist.

6. Kraftfahrzeug-Steuergerät nach einem der vorhergehenden Ansprüche,
**dadurch gekennzeichnet,**
**dass** als Stellgrößensignal (SV) am Ausgang des digitalen Reglers (PC) zum Einstellen des Stellglieds (CV) das Tastverhältnis eines PWM(pulsweitenmodulierten)- Signals verwendet ist.

7. Kraftfahrzeug-Steuergerät nach einem der vorhergehenden Ansprüche,
**dadurch gekennzeichnet,**
**dass** der digitale Regler (PC) als PID-Regler ausgebildet ist.

8. Kraftfahrzeug-Steuergerät nach Anspruch 7,
**dadurch gekennzeichnet,**
**dass** der PID-Regler (PC) das Stellgrößensignal

(SV) zur Ansteuerung des Stellglieds (SV) der elektrischen Aktuatoreinrichtung (EP) nach der Beziehung

$$\Theta = (P_n + I_n + D_n) \cdot s_\Theta$$

mit

$$P_n = p \cdot e_{c_n},$$

$$I_n = I_{n-1} + \left( i \cdot e_{c_n} \cdot \delta_n \right),$$

$$D_n = \frac{d \cdot (e_{c_n} - e_{c_{n-1}})}{\delta_n},$$

und

$$e_{c_n} = p_{t_n} - p_{m_n},$$

ausgibt, wobei
$e_{c_n}$ die Differenz (Regelabweichung) zwischen Solldruck und gemessenem Druck des Volumenstroms (Q) der Hydraulikvorrichtung (HP),
$p_{r_n}$ den Solldruck für den Volumenstrom (Q) der Hydraulikvorrichtung (HP),
$p_{m_n}$ den gemessenen Druck des Volumenstroms (Q) der Hydraulikvorrichtung,
$p$ den P-Koeffizienten des resultierenden Proportionalanteils $P_n$ des Stellgrößensignals (SV),
$i$ den I-Koeffizienten des resultierenden Integralanteils $I_n$ des Stellgrößensignals (SV),
$d$ den D-Koeffizienten des resultierenden Differentialanteils des Stellgrößensignals (SV),
$P_n$ den resultierenden Proportionalanteil des Stellgrößensignals (SV),
$I_n$ den resultierenden Integralanteil des Stellgrößensignals (SV),
$D_n$ den resultierenden D-Anteil des Stellgrößensignals (SV), $\delta_n$ die Zeit zwischen zwei Regleraufrufen (Reglerzykluszeit) des PID-Reglers (PC),
$\Theta$ das resultierende Tastverhältnis des Stellgrößensignals (SV) zur Treiberansteuerung (Stellgröße) des Stellglieds (CV) der elektrischen Aktuatoreinrichtung (EP),
$s_\Theta$ einen Skalierungsfaktor, und
n den Zeittakt des digitalen PID-Reglers (PC) bezeichnet.

**9.** Kraftfahrzeug-Steuergerät nach einem der Ansprüche 7 oder 8,
**dadurch gekennzeichnet,**
**dass** die Strombegrenzungseinheit (LI) das Stellgrößensignal (SV) des digitalen PID-Reglers (PC) nach folgender Beziehung begrenzt:

$$\Theta_{n\,max} = \Theta_{n-1} \cdot \frac{c_{max}}{c_m} \cdot (1 + \gamma) \ ,$$

wobei

$\Theta_{n_{max}}$ das begrenzte Tastverhältnis des Stellgrößensignals (SV) ist,

$\Theta_{n-1}$ das begrenzte Tastverhältnis im vorausgegangenen Reglerzyklus des Stellgrößensignals (SV) ist,

$c_m$ der gemessene Strom des Stellglieds (CV) der elektrischen Aktuatoreinrichtung (EP) ist,

$c_{max}$ der maximal erlaubte Strom des Stellglieds (CV) der elektrischen Aktuatoreinrichtung (EP) ist,

$\gamma$ eine zusätzlich erlaubte Überschreitung des Stroms des Stellglieds (CV) ist, um Messfehler auszugleichen (optional), und

n der Zeittakt des digitalen PID-Reglers (PC) ist

**10.** Kraftfahrzeug-Steuergerät nach einem der Ansprüche 7 bis 9,
**dadurch gekennzeichnet,**
**dass** der digitale PID-Regler (PC) seinen Integralanteil ($I_n$) bei Aktivierung der Strombegrenzungseinheit (LI) nach folgender Beziehung begrenzt:

$$I_{n\,max} = \frac{\Theta_{n-1}}{s_\Theta} \cdot \frac{c_{max}}{c_m} \cdot (1 + \gamma) \cdot (1 + \theta)$$

wobei

$I_{n\,max}$ der maximal erlaubte I-Anteil des Stellgrößensignals (SV) ist,

(SV) ist,

$\Theta_{n-1}$ das begrenzte Tastverhältnis des Stellgrößensignals (SV) im vorausgegangenen Reglerzyklus ist,

$c_m$ der gemessene Strom des Stellglieds (CV) ist,

$c_{max}$ der maximal erlaubte elektrische Strom des Stellglieds (CV) ist,

$\gamma$ eine zusätzlich erlaubte Überschreitung des Stroms des Stellglieds (CV) ist, um Messfehler auszugleichen (optional),

$\theta$ eine erlaubte Überhöhung des I-Anteils ist, um Regeln im Grenzbereich zu ermöglichen,

$s_\Theta$ ein Skalierungsfaktor ist, und

n der Zeittakt des digitalen PID-Reglers (PC) ist.

**11.** Verfahren zur Druckregelung des Volumenstroms (Q) einer Kraftfahrzeug-Hydraulikvorrichtung (HP) mittels des Stellglieds (CV) einer elektrischen Aktuatoreinrichtung (EP) eines digitalen Regelkreises (CLC), wobei durch eine Strombegrenzungseinheit (LI) im Vorwärtszweig (FP) des digitalen Regelkreises (CLC) zwischen dessen digitalem Regler (PC) und dem Stellglied (CV) dessen elektrischen Aktuatoreinrichtung (EP) das Stellgrößensignal (SV) des digitalen Regelkreises (CLC) zum Bauteileschutz der elektrischen Aktuatoreinrichtung (EP) begrenzt wird, wenn ein vorgegebener, zulässiger Stromschwellwert ($c_{max}$) in der elektrischen Aktuatoreinrichtung (EP) überschritten wird, insbesondere nach einem der vorhergehenden Ansprüche, **dadurch gekennzeichnet,**
**dass** durch eine zusätzliche Begrenzungseinheit (ILI) des digitalen Reglers (PC) der Integralanteil ($I_n$) seines Stellgrößensignals (SV) im Wesentlichen ab dem Zeitpunkt (tx) der Aktivierung der Strombegrenzungseinheit (LI) begrenzt wird,
wobei die Strombegrenzungseinheit (LI) mit einer Strommesseinheit (GM) der elektrischen Aktuatoreinrichtung (EP) über einen Rückkoppelzweig (RK2) gekoppelt ist, über den der gemessene elektrische Strom ($c_m$) am Stellglied (CV) mittels eines Strommesssignals ($Sc_m$) übermittelt wird.

**Claims**

**1.** Motor vehicle control device (CO) having a digital control circuit (CLC) for regulating the pressure of the volumetric flow (Q) of a motor vehicle hydraulic apparatus (HP) by means of an actuator element (CV) of an electric actuator device (EP), wherein a current-limiting unit (LI), which, in order to protect components of the electric actuator device (EP), limits the manipulated variable signal (SV) of the digital control circuit (CLC) when a predefined permissible current threshold value ($c_{max}$) in the electric actuator device (EP) is exceeded, is provided in the forward branch (FP) of the digital control circuit (CLC), between the digital controller (PC) thereof and the actuator element (CV) of the electric actuator device (EP) thereof,
**characterized**
**in that** the digital controller (PC) has an additional limiting unit (ILI) which limits the integral component ($I_n$) of its manipulated variable signal (SV) essentially starting from the time (tx) of activation of the current-limiting unit (LI), wherein the current-limiting unit (LI) is coupled to a current-measuring unit (GM) of the electric actuator device (EP) via a feedback branch (RK2) via which the measured electric current ($c_m$) at the actuator element (CV) is transmitted by means of a current-measuring signal ($Sc_m$).

**2.** Motor vehicle control device according to Claim 1,
**characterized**
**in that** the current-limiting unit (LI) is connected to the digital controller (PC) via a feedback branch (RK1) for limiting the integral component ($I_n$) of the manipulated variable signal (SV).

3. Motor vehicle control device according to one of the preceding claims, **characterized in that** the motor vehicle hydraulic apparatus (HP) in the feedback branch (FB) of the digital control circuit (CLC) is assigned a pressure sensor (PS) which measures the pressure ($Pm_n$) of the volumetric flow (Q) in the motor vehicle hydraulic apparatus (HP) and outputs a controlled variable signal (CS) which represents the pressure.

4. Motor vehicle control device according to Claim 3, **characterized in that** the output of this pressure sensor (PS) is connected to a difference-forming element (DIF) at the input of the digital control circuit (CLC), which d -forming element (DIF) forms, for the digital controller (PC), a control error signal (DIS) between a predefined setpoint pressure signal (SS) which is fed in on the input side and the measured controlled variable signal (CS) of the pressure sensor (PS).

5. Motor vehicle control device according to one of the preceding claims, **characterized in that** the actuator element (CV) of the electric actuator device (EP) is embodied as an electromagnetic control valve.

6. Motor vehicle control device according to one of the preceding claims, **characterized in that** the pulse-duty factor of a PWM (pulse-width-modulated) signal is used as manipulated variable signal (SV) at the output of the digital controller (PC) for setting the actuator element (CV).

7. Motor vehicle control device according to one of the preceding claims, **characterized in that** the digital controller (PC) is embodied as a PID controller.

8. Motor vehicle control device according to Claim 7, **characterized in that** the PID controller (PC) outputs the manipulated variable signal (SV) for actuating the actuator element (SV) of the electric actuator device (EP) according to the relationship:

$$\Theta = (P_n + I_n + D_n) \cdot s_\Theta$$

where

$$P_n = p \cdot e_{c_n} ,$$

$$I_n = I_{n-1} + \left( i \cdot e_{c_n} \cdot \delta_n \right) ,$$

$$D_n = \frac{d \cdot (e_{c_n} - e_{c_{n-1}})}{\delta_n} ,$$

and

$$e_{c_n} = p_{t_n} - p_{m_n} ,$$

wherein
$e_{c_n}$ denotes the difference (control error) between the setpoint pressure and the measured pressure of the volumetric flow (Q) of the hydraulic device (HP),
$p_{t_n}$ denotes the setpoint pressure for the volumetric flow (Q) of the hydraulic device (HP),
$p_{m_n}$ denotes the measured pressure of the volumetric flow (Q) of the hydraulic device (HP),
P denotes the P coefficient of the resultant proportional component $P_n$ of the manipulated variable signal (SV),
i denotes the I coefficient of the resultant integral component In of the manipulated variable signal (SV),
d denotes the D coefficient of the resultant differential component of the manipulated variable signal (SV),
$P_n$ denotes the resultant proportional component of the manipulated variable signal (SV),
$I_n$ denotes the resultant integral component of the manipulated variable signal (SV),
$D_n$ denotes the resultant D component of the manipulated variable signal (SV),
$\delta_n$ denotes the time between two controller calls (controller cycle time) of the PID controller (PC),
$\Theta$ denotes the resultant pulse-duty factor of the manipulated variable signal (SV) for driver actuation (manipulated variable) of the actuator element (CV) of the electric actuator device (EP),
$s_\Theta$ denotes a scaling factor, and
n denotes the clock pulse of the digital PID controller (PC).

9. Motor vehicle control device according to one of Claims 7 and 8, **characterized in that** the current-limiting unit (LI) limits the manipulated variable signal (SV) of the digital PID controller (PC) according to the following relationship:

$$\Theta_{n\,max} = \Theta_{n-1} \cdot \frac{c_{max}}{c_m} \cdot (1 + \gamma) \; ,$$

wherein

$\Theta_{n_{max}}$ is the limited pulse-duty factor of the manipulated variable signal (SV),

$\Theta_{n-1}$ is the limited pulse-duty factor in the preceding controller cycle of the manipulated variable signal (SV),

$C_m$ is the measured current of the actuator element (CV) of the electric actuator device (EP),

$c_{max}$ is the maximum permitted current of the actuator element (CV) of the electric actuator device (EP),

$\gamma$ is an additionally permitted upper transgression of the current of the actuator element (CV) in order to compensate measuring errors (optional), and

n is the clock pulse of the digital PID controller (PC).

10. Motor vehicle control device according to one of Claims 7 to 9, **characterized** **in that** the digital PID controller (PC) limits its integral component ($I_n$) when the current-limiting unit (LI) is activated, according to the following relationship:

$$I_{n\,max} = \frac{\Theta_{n-1}}{s_\Theta} \cdot \frac{c_{max}}{c_m} \cdot (1 + \gamma) \cdot (1 + \theta)$$

wherein

$I_{n\,max}$ is the maximum permitted I component of the manipulated variable signal (SV),

$\Theta_{n-1}$ is the limited pulse-duty factor of the manipulated variable signal (SV) in the preceding controller cycle,

$c_m$ is the measured current of the actuator element (CV),

$c_{max}$ is the maximum permitted electric current of the actuator element (CV),

$\gamma$ is an additionally permitted upper transgression of the current of the actuator element (CV) in order to compensate measuring errors (optional),

$\theta$ is a permitted increase in the I component in order to compensate for control operations in the limiting range,

$s_\Theta$ is a scaling factor, and

n is the clock pulse of the digital PID controller (PC).

11. Method for regulating the pressure of the volumetric flow (Q) of a motor vehicle hydraulic apparatus (HP) by means of the actuator element (CV) of an electric actuator device (EP) of a digital control circuit (CLC), wherein the current-limiting unit (LI) in the forward branch (FP) of the digital control circuit (CLC) between the digital controller (PC) thereof and the actuator element (CV) of the electric actuator device (EP) thereof limits the manipulated variable signal (SV) of the digital control circuit (CLC) in order to protect the components of the electric actuator device (EP) when a predefined permissible current threshold value ($c_{max}$) in the electric actuator device (EP) is exceeded, in particular according to one of the preceding claims, **characterized** **in that** an additional limiting unit (ILI) of the digital controller (PC) limits the integral component ($I_n$) of the manipulated variable signal (SV) thereof essentially starting from the time (tx) of activation of the current-limiting unit (LI), wherein the current-limiting unit (LI) is coupled to current-measuring unit (GM) of the electric actuator device (EP) via a feedback branch (RK2) via which the measured electric current ($c_m$) at the actuator element (CV) is transmitted by means of a current-measuring signal ($Sc_m$).

**Revendications**

1. Module de pilotage de véhicule automobile (CO) comprenant un circuit de régulation numérique (CLG) pour réguler la pression du débit volumique (Q) d'un dispositif hydraulique de véhicule automobile (HP) au moyen d'un actionneur (CV) d'un dispositif d'actionnement électrique (EP), dans lequel est prévu, dans la branche en sens direct (FP) du circuit de régulation numérique (CLC), entre son régulateur numérique (PC) et l'actionneur (CV) de son dispositif d'actionnement électrique (EP), une unité de limitation de courant (LI) qui, pour protéger les composants du dispositif d'actionnement électrique (EP), limite le signal de valeur de référence (SV) du circuit de régulation numérique (CLC) lorsqu'une valeur de seuil du courant prédéfinie autorisée ($c_{max}$) est dépassée au sein du dispositif d'actionnement électrique (EP), **caractérisé en ce que** le régulateur numérique (PC) présente une unité de limitation supplémentaire (ILI), qui limite la partie intégrale ($I_n$) de son signal de valeur de référence (SV) sensiblement à partir du moment (tx) de l'activation de l'unité de limitation de courant (LI), l'unité de limitation de courant (LI) étant couplée à une unité de mesure de courant (GM) du dispositif d'actionnement électrique (EP) via une branche de rétroaction (RK2), par laquelle le courant électrique mesuré ($c_m$) est transmis à l'actionneur (CV) par le biais d'un signal de mesure de courant (Sc$_m$).

**2.** Module de pilotage de véhicule automobile selon la revendication 1,
**caractérisé en ce que**
l'unité de limitation de courant (LI) est connectée au régulateur numérique (PC) via une branche de rétroaction (RK1) pour limiter la partie intégrale (I$_n$) du signal de valeur de référence (SV).

**3.** Module de pilotage de véhicule automobile selon l'une quelconque des revendications précédentes,
**caractérisé en ce que**
au dispositif hydraulique de véhicule automobile (HP) est affecté, dans la branche de rétroaction (FB) du circuit de régulation numérique (CLC), un capteur de pression (PS), qui mesure la pression (Pm$_n$) du débitvolumique (Q) dans le dispositif hydraulique de véhicule automobile (HP) et émet un signal de réglage de valeur (CS) représentant la pression.

**4.** Module de commande de véhicule automobile selon la revendication 3,
**caractérisé en ce que**
la sortie de ce capteur de pression (PS) est connectée à un module soustracteur (DIF) à l'entrée du circuit de régulation numérique (CLC) qui génère, pour le régulateur numérique (PC), un signal d'écart de référence (DIS) entre un signal de pression nominale (SS) prédéfinie, admis à l'entrée, et le signal de valeur de réglage (CS) mesurée par le capteur de pression (PS).

**5.** Module de pilotage de véhicule automobile selon l'une quelconque des revendications précédentes,
**caractérisé en ce que**
l'actionneur (CV) du dispositif d'actionnement électrique (EP) se présente sous la forme d'une valve magnétique de réglage électromagnétique.

**6.** Module de commande de véhicule automobile selon l'une quelconque des revendications précédentes,
**caractérisé en ce que**
est utilisé comme signal de valeur de référence (SV) à la sortie du régulateur numérique (PC), pour régler l'actionneur (CV), le taux d'impulsions d'un signal PWM (Pulse Width *Modulation* (PWM) = *Modulation de largeur d'impulsions* (MLI)).

**7.** Module de pilotage de véhicule automobile selon l'une quelconque des revendications précédentes,
**caractérisé en ce que**
le régulateur numérique (PC) se présente sous la forme d'un régulateur PID.

**8.** Module de pilotage de véhicule automobile selon la revendication 7,
**caractérisé en ce que**

le régulateur PID (PC) émet le signal de valeur de référence (SV) pour le pilotage de l'actionneur (SV) du dispositif d'actionnement électrique (EP) selon la relation suivante :

$$\Theta = (P_n + I_n + D_n)\cdot s_\Theta$$

avec

$$P_n = p\cdot e_{c_n},$$

$$I_n = I_{n-1} + \left(i\cdot e_{c_n}\cdot\delta_n\right),$$

$$D_n = \frac{d\cdot(e_{c_n} - e_{c_{n-1}})}{\delta_n},$$

et

$$e_{c_n} = p_{t_n} - p_{m_n},$$

où
e$_{cn}$ désigne la différence (écart de réglage) entre la pression nominale et la pression mesurée du débit volumique (Q) du dispositif hydraulique (HP),
p$_{tn}$ désigne la pression nominale pour le débit volumique (Q) du dispositif hydraulique (HP),
p$_{mn}$ désigne la pression mesurée du débit volumique (Q) du dispositif hydraulique,
*p* désigne le coefficient P de la partie proportionnelle résultante p$_n$ du signal de valeur de référence (SV),
*i* désigne le coefficient I de la partie intégrale résultante I$_n$ du signal de valeur de référence (SV),
*d* désigne le coefficient D de la partie différentielle résultante du signal de valeur de référence (SV),
*P$_n$* désigne la partie proportionnelle résultante du signal de valeur de référence (SV),
I$_n$ désigne la partie intégrale résultante du signal de valeur de référence (SV),
*D$_n$* désigne la partie D résultante du signal de valeur de référence (SV),
δ$_n$ désigne la durée de temps entre deux appels (temps de cycle du régulateur) du régulateur PID (PC),
Θ désigne le taux d'impulsions résultant du signal de valeur de référence (SV) pour la commande de déclenchement (valeur de référence) de l'actionneur (CV) du dispositif d'actionnement électrique (EP),
*s$_\theta$* désigne un facteur de graduation, et

n désigne la fréquence du régulateur PID numérique (PC).

**9.** Module de pilotage de véhicule automobile selon l'une quelconque des revendications 7 ou 8, **caractérisé en ce que** l'unité de limitation de courant (LI) limite le signal de valeur de référence (SV) du régulateur PID numérique (PC) selon la relation suivante :

$$\Theta_{n\,\max} = \Theta_{n-1} \cdot \frac{c_{\max}}{c_m} \cdot (1+\gamma) \ ,$$

où

$\Theta_{n\max}$ est le taux d'impulsions limité du signal de valeur de référence (SV),

$\Theta_{n-1}$ est le taux d'impulsions limité dans le cycle de régulateur précédent du signal de valeur de référence (SV),

$c_m$ est le courant mesuré de l'actionneur (CV) du dispositif d'actionnement électrique (EP),

$c_{\max}$ est le courant maximal autorisé de l'actionneur (CV) du dispositif d'actionnement électrique (EP),

$\gamma$ est un dépassement supplémentaire autorisé du courant de l'actionneur (CV) pour compenser des erreurs de mesure (facultatif), et

n désigne la fréquence du régulateur PID numérique (PC).

**10.** Module de pilotage de véhicule automobile selon l'une quelconque des revendications 7 à 9, **caractérisé en ce que** le régulateur PID numérique (PC) limite sa partie intégrale ($I_n$) lors de l'activation de l'unité de limitation de courant (LI) selon la relation suivante :

$$I_{n\,\max} = \frac{\Theta_{n-1}}{s_{\Theta}} \cdot \frac{c_{\max}}{c_m} \cdot (1+\gamma) \cdot (1+\theta)$$

où

$I_{n\max}$ est la partie I maximale autorisée du signal de valeur de référence (SV),

$\Theta_{n-1}$ est le taux d'impulsions limité du signal de valeur de référence (SV) dans le cycle de régulateur précédent,

$c_m$ est le courant mesuré de l'actionneur (CV),

$c_{\max}$ est le courant électrique maximal autorisé de l'actionneur (CV),

$\gamma$ est un dépassement supplémentaire autorisé du courant de l'actionneur (CV) pour compenser des erreurs de mesure (facultatif),

$\theta$ est une suraugmentation autorisée de la partie I pour permettre des réglages dans des zones de valeurs limites,

se est un facteur de graduation, et

n désigne la fréquence du régulateur PID numérique (PC).

**11.** Procédé pour réguler la pression du débit volumique (Q) d'un dispositif hydraulique de véhicule automobile (HP) au moyen de l'actionneur (CV) d'un dispositif d'actionnement électrique (EP) d'un circuit de régulation numérique (CLC), dans lequel une unité de limitation de courant (LI) dans la branche en sens direct (FP) du circuit de régulation numérique (CLC), entre son régulateur numérique (PC) et l'actionneur (CV) de son dispositif d'actionnement électrique (EP), limite le signal de valeur de référence (SV) du circuit de régulation numérique (CLC) pour protéger les composants du dispositif d'actionnement électrique (EP), lorsqu'une valeur de seuil de courant prédéfinie autorisée ($c_{\max}$) est dépassée dans le dispositif d'actionnement électrique (EP), en particulier selon l'une quelconque des revendications précédentes, **caractérisé en ce que** une unité de limitation de courant supplémentaire (ILI) du régulateur numérique (PC) limite sensiblement la partie intégrale ($I_n$) de son signal de valeur de référence (SV) à partir du moment (tx) de l'activation de l'unité de limitation de courant (LI), l'unité de limitation de courant (LI) étant couplée à une unité de mesure de courant (GM) du dispositif d'actionnement électrique (EP) via une branche de rétroaction (RK2), par laquelle le courant électrique mesuré ($c_m$) est transmis à l'actionneur (CV) par le biais d'un signal de mesure de courant ($Sc_m$).

# EP 2 030 095 B1

## IN DER BESCHREIBUNG AUFGEFÜHRTE DOKUMENTE

**In der Beschreibung aufgeführte Patentdokumente**

- EP 1118517 A1